# EUROPEAN PATENT SPECIFICATION

(11) **EP 4 024 337 B1**
(45) Date of publication and mention of the grant of the patent: **13.11.2024**
(21) Application number: 21218068.1
(22) Date of filing: 29.12.2021
(51) Int. Cl.: G06T 7/00, G01M 17/04, G01B 11/10

(54) **SYSTEM AND METHOD FOR THE AUTOMATIC DIAGNOSIS OF THE CONDITION OF COMPONENTS OF A LAND VEHICLE**
SYSTEM UND VERFAHREN ZUR AUTOMATISCHEN DIAGNOSE DES ZUSTANDS VON KOMPONENTEN EINES LANDFAHRZEUGS
SYSTÈME ET PROCÉDÉ DE DIAGNOSTIC AUTOMATIQUE DE L'ÉTAT DE COMPOSANTS DE VÉHICULE TERRESTRE

(30) Priority: 30.12.2020 IT 202000032819
(43) Date of publication of application: 06.07.2022
(73) Proprietor: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(56) References cited:
- WO-A1-2016/010441
- WO-A1-2019/206394
- US-A1- 2020 322 546

## Description

### TECHNICAL FIELD

The invention relates to a diagnosis system and a method for the automatic diagnosis of the condition of components of a land vehicle, in particular of the condition of wear of said components.

### PRIOR ART

As it is known, land vehicles require a frequent maintenance to be carried out in dedicated workshops, in order to diagnose and/or solve possible mechanical problems due to the wear of given components of the land vehicle.

The procedure for the diagnosis of the degree of wear of the mechanical components of a land vehicle currently involves having a skilled technician visually inspect said components.

In particular, the inspection of the components of the land vehicle located in the lower part of the vehicle, which are not visible when the land vehicle rests on the ground, requires the land vehicle to be lifted by means of a lift.

By way of example, the mechanical components that require the lifting of the vehicle for the inspection of their degree of wear comprise the suspensions of the wheels and the underbody of the land vehicle.

Documents WO 2016/010441, US 2020/0322546 and WO 2019/206394 disclose systems for the inspection of components located in the lower part of a land vehicle.

Furthermore, in given circumstances, diagnosis procedures involve the application of lateral forces to given components of the land vehicle, in particular to the wheels of the vehicle, in order to check for the existence of so-called "backlashes", namely the movement of said components along directional axes other than the axes provided for during the designing phase.

A drawback of known diagnosis procedures lies in the fact that the diagnosis of the condition of wear of mechanical components is subjected to errors, since said diagnosis depends on the experience and on the skills of the technician carrying it out.

Furthermore, the need to lift the land vehicle significantly affects the times and costs associated with the diagnosis operations and requires the availability of a dedicated space, since the land vehicle lifting equipment is expensive and bulky.

### SUBJECT-MATTER OF THE INVENTION

Therefore, the object of the invention is to provide a diagnosis system for the automatic diagnosis of the condition of components of a land vehicle, which at least partly overcomes the drawbacks of the prior art discussed above.

In particular, it is an object of the invention to provide a diagnosis system that reduces errors, the amount of time needed for the inspection and the costs arising from the inspection and, at the same time, allows a non-particularly skilled operator to carry out the inspection.

According to the invention, there is provided a diagnosis system for the automatic diagnosis of the condition of wear of predetermined components of a land vehicle; the system comprising:
- a diagnosis station comprising a support base, which is fixed to the ground and is configured to support approximately at ground level at least two wheels of the land vehicle; and an image acquisition assembly, which is coupled to said support base in such a way to be positioned, in use, at least partially below the land vehicle and is configured to acquire images from below of the predetermined components of the land vehicle; the image acquisition assembly comprising two first image acquisition devices, each of which is arranged on the support base at a support zone of a respective wheel of the land vehicle and is configured to acquire first images of components of a suspension of the land vehicle in proximity to said respective wheel; the support base comprising two movable plates, each of which is configured to support a respective wheel of the land vehicle and to move the respective wheel in a direction substantially parallel to the ground and substantially parallel to the rotation axis of each wheel; and
- a control unit configured to control the movement of each movable plate, to control the image acquisition assembly so as to acquire the first images of the predetermined components of the land vehicle when a wheel of the land vehicle is moved by means of the respective movable plate in a direction substantially parallel to the rotation axis of each wheel, and to determine the condition of wear of said components of the suspension as a function of the first acquired images;
each first image acquisition device being fixed to the support base in the space comprised between the two movable plates.

Thanks to the invention, the diagnosis of the condition of the mechanical components can be carried out in an automatic manner, significantly limiting errors and reducing the times and the costs associated with the diagnosis operations.

Furthermore, the components of the land vehicle located in the lower part of the land vehicle can be subjected the inspection without having to lift the land vehicle.

A further object of the invention is to provide a diagnosis method for the automatic diagnosis of the condition of components of a land vehicle, which at least partly overcomes the drawbacks of the prior art discussed above.

According to the invention, there is provided a diagnosis method for the automatic diagnosis of the condition of wear of predetermined components of a land vehicle; the method comprising the steps of:
- supporting, approximately at ground level, two wheels of the land vehicle by means of two respective movable plates;
- moving the two wheels of the land vehicle by means of the two respective movable plates in a direction substantially parallel to the ground and substantially parallel to the rotation axis of each wheel;
- acquiring first images from below of a suspension of the land vehicle in proximity to each wheel of the land vehicle by means of two first image acquisition devices, each of which is arranged at a support zone of a respective wheel of the land vehicle, each first image acquisition device being fixed to the support base in the space comprised between the two movable plates;
- controlling the two first image acquisition devices so as to acquire the first images of the predetermined components of the land vehicle when the respective wheels of the land vehicle are moved by means of the respective movable plates in directions substantially parallel to the rotation axis of each wheel; and
- determining the condition of wear of said components of the suspension as a function of the first acquired images.

In this way, the diagnosis of the condition of the mechanical components can be performed in a reliable and repeatable manner, limiting both the times and the costs associated with said diagnosis.

### BRIEF DESCRIPTION OF THE DRAWINGS

Further features and advantages of the invention are defined in the appended dependent claims and will be best understood upon perusal of the following description of a non-limiting embodiment, with reference to the accompanying Figures, wherein:
- Figure 1 is a perspective view, with schematic parts, of a diagnosis system according to the invention and of a land vehicle;
- Figure 2 is a perspective view, with schematic parts, of the diagnosis system of Figure 1; and
- Figure 3 is a view from the top, with schematic parts, of the diagnosis system of Figure 1.

### PREFERRED EMBODIMENT OF THE INVENTION

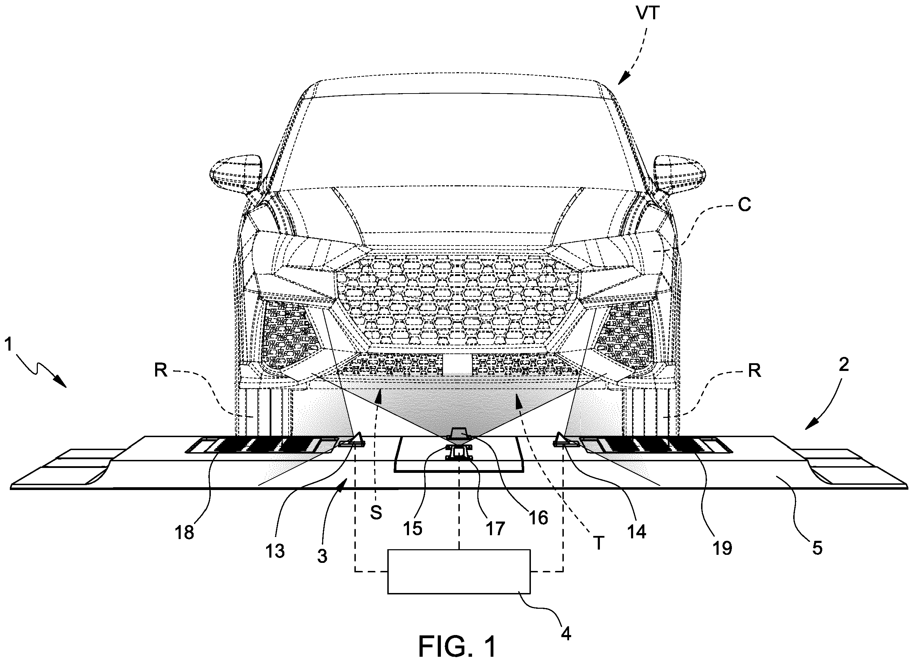

With reference to Figure 1, reference number 1 indicates, as a whole, a diagnosis system for the automatic diagnosis of the condition of predetermined components of a land vehicle VT, in particular of the condition of wear of said components.

According to an embodiment, the diagnosis system 1 be used in mechanical workshops dedicated to the maintenance and/or repair of land vehicles, without for this reasons limiting the wide range of possible applications of the invention.

In the case described and shown herein, the diagnosis system 1 comprises a diagnosis station 2, which comprises an image acquisition assembly 3 configured to acquire images of predetermined components of the land vehicle VT; and a control unit 4 configured to determine the condition, preferably the condition of wear, of said predetermined components as a function of the acquired images.

In particular, the diagnosis station 2 comprises a support base 5, which is fixed to the ground and is configured to support, approximately at ground level, at least two wheels R of the land vehicle VT.

In the case described and shown herein, the support base 5 is configured to support the left wheel R and the right wheel R of one of the two axles of the land vehicle VT, which are not shown in the accompanying Figures.

The image acquisition assembly 3 is coupled to the support base 5 so as to be at least partly located under the land vehicle VT in order to acquire images, from below, of the predetermined components of the land vehicle VT.

With reference to Figures 1-3, the image acquisition assembly 3 comprises an image acquisition device 13 and an image acquisition device 14, each coupled to the support base 5 and configured to acquire images of components of a suspension S of the land vehicle VT, in particular of bushings of the suspension S.

More in detail, each image acquisition device 13, 14 is arranged on the support base 5 at a support zone of a respective wheel R of the land vehicle VT and is configured to acquire images, from below, of the components of the suspension S of the land vehicle VT in proximity to said respective wheel R. In other words, each image acquisition device 13, 14 is fixed to the support base 5 and faces said components of the suspension S of the land vehicle VT when the land vehicle VT is standing on the support base 5.

According to an embodiment, the image acquisition devices 13 and 14 are configured to simultaneously acquire the images, from below, of the suspension S of the land vehicle VT.

The control unit 4 is configured to determine the condition of said components of the suspension S as a function of the images acquired by each image acquisition device 13, 14.

Furthermore, the image acquisition assembly 3 comprises an image acquisition device 15, which is coupled to the support base 5 and is configured to acquire images, from below, of component of a frame T of the land vehicle VT, in particular of the underbody of the land vehicle VT.

The control unit 4 is configured to determine the condition of said components of the frame T as a function of the images acquired by the image acquisition device 15.

In this way, it is possible to determine the condition of components located in the lower part of the land vehicle VT, in particular of components of the suspension S and of the frame T, which are not visible when the land vehicle VT rests on the ground, without having to lift the land vehicle VT.

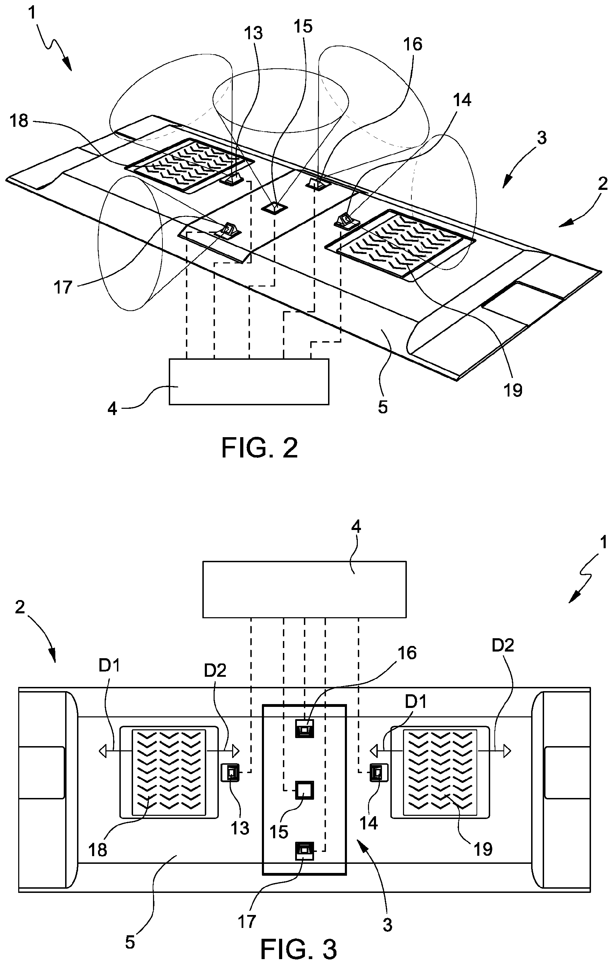

With reference to Figures 2 and 3, the image acquisition assembly 3 comprises an image acquisition device 16 and an image acquisition device 17, which are coupled to the support base 5 and are configured to acquire images of a front portion and of a rear portion of the land vehicle VT, respectively, in particular of a front portion and of a rear portion of the body C of the land vehicle VT.

The control unit 4 is configured to determine the condition of the front portion and of the rear portion of the land vehicle VT as a function of the images acquired by the image acquisition device 16 and by the image acquisition device 17.

Each image acquisition device 13, 14, 15, 16, 17 is connected to the control unit 4 so as to exchange data with the control unit 4. In particular, each image acquisition device 13, 14, 15, 16, 17 is connected to the control unit 4 by means of a respective cable, which is not shown in the accompanying Figures, or in wireless mode or in any other way enabling the exchange of data.

According to an embodiment, each image acquisition device 13, 14, 15, 16, 17 comprises a camera or a video camera or any other optical device designed to acquire images.

The control unit 4 is configured to process the images acquired by each image acquisition device 13, 14, 15, 16, 17 so as to determine parameters indicative of the condition of said predetermined components and to compare said parameters with reference values of the predetermined components. In this way, the control unit 4 provides an indication of the condition of wear of said components.

With reference to Figures 1-3, the support base 5 comprises two movable plates 18 and 19, each configured to support a respective wheel R of the land vehicle VT and to move the respective wheel R in a direction D1, D2 substantially parallel to the ground. In particular, the directions D1 and D2 are substantially parallel to the rotation axis of each wheel R, which is not shown in the accompanying Figures.

Each image acquisition device 13, 14 is fixed to the support base 5 in the space comprised between the two movable plates 18 and 19.

The movement of each movable plate 18, 19 is operated by a moving system, which is not shown in the accompanying Figures and comprises at least one electric or hydraulic or pneumatic actuator or of any other type.

The control unit 4 is configured to control the movement of each movable plate 18 19 and to control the image acquisition assembly 3 so as to acquire images of said predetermined components of the land vehicle VT when a wheel R of the land vehicle VT is moved.

In these circumstances, the control unit 4 is configured to determine at least one value of a backlash of a predetermined component as a function of the images acquired when a wheel R of the land vehicle VT is moved by the respective movable plate 18, 19.

Furthermore, each image acquisition device 13, 14 is configured to detect the position of the respective wheel R of the land vehicle VT and/or to check for the correct alignment of the respective wheel R of the land vehicle VT on the respective movable plate 18, 19.

Basically, each image acquisition device 13, 14 is configured both to acquire images of components of a suspension S of the land vehicle VT and to detect the position of the respective wheel R and/or to check for the correct alignment of the respective wheel R on the respective movable plate 18, 19, simplifying the architecture of the diagnosis station 2.

In use, before placing the wheels R of the land vehicle VT onto the support base 5, the front portion of the land vehicle VT is arranged so as to face the image acquisition device 16 in order to allow the image acquisition device 16 to acquire images of the front portion of the body C of the land vehicle VT.

In this configuration, the image acquisition device 16 acquires the images of the front portion of the body C of the land vehicle VT and transmits said images to the control unit 4, which processes said images and determines the condition of the front portion of the body C of the land vehicle VT.

Subsequently, with reference to Figure 1, the land vehicle VT is placed onto the support base 5, so that the front wheels R are supported by the respective movable plates 18, 19.

In this configuration, the image acquisition devices 13, 14 and 15 acquire images, from below, of the respective components of the land vehicle VT, in particular of components of the suspension S and of components of the frame T, and transmit said images to the control unit 4, which processes the received images and determines the condition of said components of the land vehicle VT in an automatic manner.

According to an embodiment, the control unit 4 controls the movement of the movable plates 18 and 19 so as to determine the movement of the wheels R in the directions D1 and D2.

Simultaneously, the control unit 4 controls the image acquisition assembly 3, in particular the image acquisition devices 13 and 14, so as to acquire images of predetermined components of the land vehicle VT, in particular of the bushings of the suspension S of the land vehicle VT, when the respective wheel R of the land vehicle VT is moved.

In this way, it is possible to determine at least one value of a backlash of a predetermined component of the land vehicle VT, in particular of the bushings of the suspension S of the land vehicle VT, as a function of the acquired images and to determine the state thereof in an automatic manner.

According to an embodiment of the invention, the rear wheels R of the land vehicle VT are placed onto the support base 5 and these operations are repeated.

Subsequently, the land vehicle VT is moved so as to that the rear portion of the land vehicle VT faces the image acquisition device 17 in order to allow the image acquisition device 17 to acquire images of the rear portion of the body C of the land vehicle VT.

The images acquired by the image acquisition device 17 are transmitted to the control unit 4, which processes said images and determines the condition of the rear portion of the body C of the land vehicle VT.

While embodiments have been described herein, the scope of the invention is defined by the appended claims.

## Claims

1. A diagnosis system for the automatic diagnosis of the condition of wear of predetermined components of a land vehicle; the system (1) comprising:
- a diagnosis station (2) comprising a support base (5), which is fixed to the ground and is configured to support approximately at ground level at least two wheels (R) of the land vehicle (VT); and an image acquisition assembly (3), which is coupled to said support base (5) in such a way to be positioned, in use, at least partially below the land vehicle (VT) and is configured to acquire images from below of the predetermined components of the land vehicle (VT); the image acquisition assembly (3) comprising two first image acquisition devices (13, 14), each of which is arranged on the support base (5) at a support zone of a respective wheel (R) of the land vehicle (VT) and is configured to acquire first images of components of a suspension (S) of the land vehicle (VT) in proximity to said respective wheel (R); the support base (5) comprising two movable plates (18, 19), each of which is configured to support a respective wheel (R) of the land vehicle (VT) and to move the respective wheel (R) in a direction (D1; D2) substantially parallel to the ground and substantially parallel to the rotation axis of each wheel (R) ; and
- a control unit (4) configured to control the movement of each movable plate (18; 19), to control the image acquisition assembly (3) so as to acquire the first images of the predetermined components of the land vehicle (VT) when a wheel (R) of the land vehicle (VT) is moved by means of the respective movable plate (18, 19) in a direction substantially parallel to the rotation axis of each wheel (R), and to determine the condition of wear of said components of the suspension (S) as a function of the first acquired images;
each first image acquisition device (13, 14) being fixed to the support base (5) in the space comprised between the two movable plates (18, 19).

2. The system as claimed in claim 1, wherein the image acquisition assembly (3) comprises at least one second image acquisition device (15), which is configured to acquire second images of components of a frame (T) of the land vehicle (VT); the control unit (4) being configured to determine the condition of said components of the frame (T) as a function of the second acquired images.

3. The system as claimed in any one of the foregoing claims, wherein the image acquisition assembly (3) comprises at least one third image acquisition device (16; 17), which is configured to acquire third images of a front or rear portion of the land vehicle (VT); the control unit (4) being configured to determine the condition of the front or rear portion of the land vehicle (VT) as a function of the third acquired images.

4. The system as claimed in any one of the foregoing claims, wherein the control unit (4) is configured to determine at least one value of a backlash of a predetermined component of the land vehicle (VT) as a function of the acquired images.

5. The system as claimed in any one of the foregoing claims, wherein each image acquisition device (13; 14) is configured to detect the position of the respective wheel (R) of the land vehicle (VT) and/or to check for the correct alignment of the respective wheel (R) of the land vehicle (VT) on the respective movable plate (18; 19).

6. The system as claimed in any one of the foregoing claims, wherein the control unit (4) is configured to process the acquired images so as to determine parameters indicative of the condition of the predetermined components and to compare said parameters with reference values of the predetermined components.

7. A diagnosis method for the automatic diagnosis of the condition of wear of predetermined components of a land vehicle (VT); the method comprising the steps of:
- supporting, approximately at ground level, two wheels (R) of the land vehicle (VT) by means of two respective movable plates (18; 19);
- moving the two wheels (R) of the land vehicle (VT) by means of the two respective movable plates (18; 19) in a direction (D1; D2) substantially parallel to the ground and substantially parallel to the rotation axis of each wheel (R) ;
- acquiring first images from below of components of a suspension (S) of the land vehicle (VT) in proximity to each wheel (R) of the land vehicle (VT) by means of two first image acquisition devices (13, 14), each of which is arranged in a support zone of a respective wheel (R) of the land vehicle (VT), each first image acquisition device (13, 14) being fixed to the support base (5) in the space comprised between the two movable plates (18, 19);
- controlling the two first image acquisition devices (13, 14) so as to acquire the first images of the predetermined components of the land vehicle (VT) when the respective wheels (R) of the land vehicle (VT) are moved by means of the respective movable plates (18, 19) in directions substantially parallel to the rotation axis of each wheel (R); and
- determining the condition of wear of said components of the suspension (S) as a function of the first acquired images.

8. The method as claimed in claim 7, wherein the predetermined components comprise components of a suspension (S) of the land vehicle (VT); and/or components of a frame (T) of the land vehicle (VT); and/or a front or rear portion of the land vehicle (VT).

9. The method as claimed in claim 7 or 8, and comprising the step of determining at least one value of a backlash of a predetermined component as a function of the acquired images.

10. The method as claimed in any one of claims 7 to 9, and comprising the steps of processing the acquired images so as to determine parameters indicative of the condition of the predetermined components; and comparing said parameters with reference values of the predetermined components.

## Patentansprüche

1. Diagnosesystem zur automatischen Diagnose des Verschleißzustands von vorbestimmten Komponenten eines Landfahrzeugs; wobei das System (1) umfasst:
- eine Diagnosestation (2), umfassend eine Stütz- bzw. Trägerbasis (5), die am Boden befestigt bzw. fixiert ist und konfiguriert ist, zumindest zwei Räder (R) des Landfahrzeugs (VT) ungefähr auf Bodenhöhe zu stützen bzw. zu tragen; und eine Bildaufnahmeanordnung (3), die derart mit der Stützbasis (5) gekoppelt ist, dass sie bei Gebrauch zumindest teilweise unter dem Landfahrzeug (VT) positioniert ist, und konfiguriert ist, Bilder von unterhalb der vorbestimmten Komponenten des Landfahrzeugs (VT) aufzunehmen; wobei die Bildaufnahmeanordnung (3) zwei erste Bildaufnahmevorrichtungen (13, 14) umfasst, von denen jede an bzw. auf der Stützbasis (5) an einer Stütz- bzw. Trägerzone eines jeweiligen Rads (R) des Landfahrzeugs (VT) angeordnet ist und konfiguriert ist, erste Bilder von Komponenten einer Aufhängung (S) des Landfahrzeugs (VT) in der Nähe des jeweiligen Rads (R) aufzunehmen; wobei die Stützbasis (5) zwei bewegliche Platten (18, 19) umfasst, von denen jede konfiguriert ist, ein jeweiliges Rad (R) des Landfahrzeugs (VT) zu stützen bzw. zu tragen und das jeweilige Rad (R) in eine Richtung (D1; D2) zu bewegen, die im Wesentlichen parallel zu dem Boden und im Wesentlichen parallel zu der Rotationsachse jedes Rads (R) ist; und
- eine Steuer- bzw. Regeleinheit (4), die konfiguriert ist, die Bewegung jeder beweglichen Platte (18; 19) zu steuern bzw. zu regeln, die Bildaufnahmeanordnung (3) dahingehend zu steuern bzw. zu regeln, die ersten Bilder der vorbestimmten Komponenten des Landfahrzeugs (VT) aufzunehmen, wenn ein Rad (R) des Landfahrzeugs (VT) mittels der jeweiligen beweglichen Platte (18, 19) in eine Richtung bewegt wird, die im Wesentlichen parallel zu der Rotationsachse jedes Rads (R) ist, und den Verschleißzustand der Komponenten der Aufhängung (S) als eine Funktion bzw. in Abhängigkeit der ersten aufgenommenen Bilder zu bestimmen;
wobei jede erste Bildaufnahmevorrichtung (13, 14) an der Stützbasis (5) in dem Raum befestigt bzw. fixiert ist, der zwischen den beiden beweglichen Platten (18, 19) umfasst bzw. gebildet ist.

2. System nach Anspruch 1, wobei die Bildaufnahmeanordnung (3) zumindest eine zweite Bildaufnahmevorrichtung (15) umfasst, die konfiguriert ist, zweite Bilder von Komponenten eines Rahmens (T) des Landfahrzeugs (VT) aufzunehmen; wobei die Steuer- bzw. Regeleinheit (4) konfiguriert ist, den Zustand der Komponenten des Rahmens (T) als eine Funktion bzw. in Abhängigkeit der zweiten aufgenommenen Bilder zu bestimmen.

3. System nach einem der vorhergehenden Ansprüche, wobei die Bildaufnahmeanordnung (3) zumindest eine dritte Bildaufnahmevorrichtung (16; 17) umfasst, die konfiguriert ist, dritte Bilder eines vorderen oder hinteren Abschnitts des Landfahrzeugs (VT) aufzunehmen; wobei die Steuer- bzw. Regeleinheit (4) konfiguriert ist, den Zustand des vorderen oder hinteren Abschnitts des Landfahrzeugs (VT) als eine Funktion bzw. in Abhängigkeit der dritten aufgenommenen Bilder zu bestimmen.

4. System nach einem der vorhergehenden Ansprüche, wobei die Steuer- bzw. Regeleinheit (4) konfiguriert ist, zumindest einen Wert eines Spiels einer vorbestimmten Komponente des Landfahrzeugs (VT) als eine Funktion bzw. in Abhängigkeit der aufgenommenen Bilder zu bestimmen.

5. System nach einem der vorhergehenden Ansprüche, wobei jede Bildaufnahmevorrichtung (13; 14) konfiguriert ist, die Position des jeweiligen Rads (R) des Landfahrzeugs (VT) zu detektieren und/oder die korrekte Ausrichtung des jeweiligen Rads (R) des Landfahrzeugs (VT) an bzw. auf der jeweiligen beweglichen Platte (18; 19) zu überprüfen.

6. System nach einem der vorhergehenden Ansprüche, wobei die Steuer- bzw. Regeleinheit (4) konfiguriert ist, die aufgenommenen Bilder zu verarbeiten, um Parameter zu bestimmen, die den Zustand der vorbestimmten Komponenten angeben, und die Parameter mit Referenzwerten der vorbestimmten Komponenten zu vergleichen.

7. Diagnoseverfahren zur automatischen Diagnose des Verschleißzustands von vorbestimmten Komponenten eines Landfahrzeugs (VT); wobei das Verfahren die Schritte umfasst:
- Stützen bzw. Tragen, ungefähr auf Bodenhöhe, von zwei Rädern (R) des Landfahrzeugs (VT) mittels zweier jeweiliger beweglicher Platten (18; 19);
- Bewegen der beiden Räder (R) des Landfahrzeugs (VT) mittels der beiden jeweiligen beweglichen Platten (18; 19) in eine Richtung (D1; D2), die im Wesentlichen parallel zu dem Boden und im Wesentlichen parallel zu der Rotationsachse jedes Rads (R) ist;
- Aufnehmen erster Bilder von unterhalb von Komponenten einer Aufhängung (S) des Landfahrzeugs (VT) in der Nähe jedes Rads (R) des Landfahrzeugs (VT) mittels zweier erster Bildaufnahmevorrichtungen (13, 14), von denen jede in einer Stütz- bzw. Trägerzone eines jeweiligen Rads (R) des Landfahrzeugs (VT) angeordnet ist, wobei jede erste Bildaufnahmevorrichtung (13, 14) an der Stützbasis (5) in dem Raum befestigt bzw. fixiert ist, der zwischen den beiden beweglichen Platten (18, 19) umfasst bzw. gebildet ist;
- Steuern bzw. Regeln der beiden ersten Bildaufnahmevorrichtungen (13, 14) dahingehend, die ersten Bilder der vorbestimmten Komponenten des Landfahrzeugs (VT) aufzunehmen, wenn die jeweiligen Räder (R) des Landfahrzeugs (VT) mittels der jeweiligen beweglichen Platten (18, 19) in Richtungen bewegt werden, die im Wesentlichen parallel zu der Rotationsachse jedes Rads (R) sind; und
- Bestimmen des Verschleißzustands der Komponenten der Aufhängung (S) als eine Funktion bzw. in Abhängigkeit der ersten aufgenommenen Bilder.

8. Verfahren nach Anspruch 7, wobei die vorbestimmten Komponenten Komponenten einer Aufhängung (S) des Landfahrzeugs (VT); und/oder Komponenten eines Rahmens (T) des Landfahrzeugs (VT); und/oder einen vorderen oder hinteren Abschnitt des Landfahrzeugs (VT) umfassen.

9. Verfahren nach Anspruch 7 oder 8, umfassend den Schritt des Bestimmens zumindest eines Werts eines Spiels einer vorbestimmten Komponente als eine Funktion bzw. in Abhängigkeit der aufgenommenen Bilder.

10. Verfahren nach einem der Ansprüche 7 bis 9, umfassend die Schritte eines Verarbeitens der aufgenommenen Bilder, um Parameter zu bestimmen, die den Zustand der vorbestimmten Komponenten angeben; und eines Vergleichens der Parameter mit Referenzwerten der vorbestimmten Komponenten.

## Revendications

1. Système de diagnostic pour le diagnostic automatique de l'état d'usure de composants prédéterminés d'un véhicule terrestre ; le système (1) comprenant :
- une station de diagnostic (2) comprenant une base de support (5), qui est fixée au sol et est configurée pour supporter approximativement au niveau du sol au moins deux roues (R) du véhicule terrestre (VT) ; et un ensemble d'acquisition d'images (3), qui est couplé à ladite base de support (5) de manière à être positionné, lors de l'utilisation, au moins partiellement sous le véhicule terrestre (VT) et est configuré pour acquérir des images depuis le dessous des composants prédéterminés du véhicule terrestre (VT) ; l'ensemble d'acquisition d'images (3) comprenant deux dispositifs d'acquisition de premières images (13, 14), dont chacun est agencé sur la base de support (5) au niveau d'une zone de support d'une roue (R) respective du véhicule terrestre (VT) et est configuré pour acquérir des premières images de composants d'une suspension (S) du véhicule terrestre (VT) à proximité de ladite roue (R) respective ; la base de support (5) comprenant deux plaques mobiles (18, 19), dont chacune est configurée pour supporter une roue (R) respective du véhicule terrestre (VT) et pour déplacer la roue (R) respective dans une direction (D1; D2) sensiblement parallèle au sol et sensiblement parallèle à l'axe de rotation de chaque roue (R) ; et
- une unité de commande (4) configurée pour commander le mouvement de chaque plaque mobile (18 ; 19), pour commander l'ensemble d'acquisition d'images (3) de manière à acquérir les premières images des composants prédéterminés du véhicule terrestre (VT) lorsqu'une roue (R) du véhicule terrestre (VT) est déplacée au moyen de la plaque mobile (18, 19) respective dans une direction sensiblement parallèle à l'axe de rotation de chaque roue (R), et pour déterminer l'état d'usure desdits composants de la suspension (S) en fonction des premières images acquises ;
chaque dispositif d'acquisition de premières images (13, 14) étant fixé à la base de support (5) dans l'espace compris entre les deux plaques mobiles (18, 19).

2. Système selon la revendication 1, dans lequel l'ensemble d'acquisition d'images (3) comprend au moins un dispositif d'acquisition de deuxièmes images (15), qui est configuré pour acquérir des deuxièmes images de composants d'un châssis (T) du véhicule terrestre (VT) ; l'unité de commande (4) étant configuré pour déterminer l'état desdits composants du châssis (T) en fonction des deuxièmes images acquises.

3. Système selon l'une quelconque des revendications précédentes, dans lequel l'ensemble d'acquisition d'images (3) comprend au moins un dispositif d'acquisition de troisièmes images (16 ; 17), qui est configuré pour acquérir des troisièmes images d'une partie avant ou arrière du véhicule terrestre (VT) ; l'unité de commande (4) étant configurée pour déterminer l'état de la partie avant ou arrière du véhicule terrestre (VT) en fonction des troisièmes images acquises.

4. Système selon l'une quelconque des revendications précédentes, dans lequel l'unité de commande (4) est configurée pour déterminer au moins une valeur d'un jeu d'un composant prédéterminé du véhicule terrestre (VT) en fonction des images acquises.

5. Système selon l'une quelconque des revendications précédentes, dans lequel chaque dispositif d'acquisition d'images (13 ; 14) est configuré pour détecter la position de la roue (R) respective du véhicule terrestre (VT) et/ou pour contrôler l'alignement correct de la roue (R) respective du véhicule terrestre (VT) sur la plaque mobile (18 ; 19) respective.

6. Système selon l'une quelconque des revendications précédentes, dans lequel l'unité de commande (4) est configurée pour traiter les images acquises de manière à déterminer des paramètres indiquant l'état des composants prédéterminés et à comparer lesdits paramètres à des valeurs de référence des composants prédéterminés.

7. Méthode de diagnostic pour le diagnostic automatique de l'état d'usure de composants prédéterminés d'un véhicule terrestre (VT) ; la méthode comprenant les étapes de :
- support, approximativement au niveau du sol, de deux roues (R) du véhicule terrestre (VT) au moyen de deux plaques mobiles (18 ; 19) respectives ;
- déplacement des deux roues (R) du véhicule terrestre (VT) au moyen des deux plaques mobiles (18 ; 19) respectives dans une direction (D1; D2) sensiblement parallèle au sol et sensiblement parallèle à l'axe de rotation de chaque roue (R) ;
- acquisition de premières images depuis le dessous de composants d'une suspension (S) du véhicule terrestre (VT) à proximité de chaque roue (R) du véhicule terrestre (VT) au moyen de deux dispositifs d'acquisition de premières images (13, 14), dont chacun est agencé dans une zone de support d'une roue (R) respective du véhicule terrestre (VT), chaque dispositif d'acquisition de premières images (13, 14) étant fixé à la base de support (5) dans l'espace compris entre les deux plaques mobiles (18, 19) ;
- commande des deux dispositifs d'acquisition de premières images (13, 14) de manière à acquérir les premières images des composants prédéterminés du véhicule terrestre (VT) lorsque les roues (R) respectives du véhicule terrestre (VT) sont déplacées au moyen des plaques mobiles (18, 19) respectives dans des directions sensiblement parallèles à l'axe de rotation de chaque roue (R) ; et
- détermination de l'état d'usure desdits composants de la suspension (S) en fonction des premières images acquises.

8. Méthode selon la revendication 7, dans laquelle les composants prédéterminés comprennent des composants d'une suspension (S) du véhicule terrestre (VT) ; et/ou des composants d'un châssis (T) du véhicule terrestre (VT) ; et/ou une partie avant ou arrière du véhicule terrestre (VT).

9. Méthode selon la revendication 7 ou 8, et comprenant l'étape de détermination d'au moins une valeur d'un jeu d'un composant prédéterminé en fonction des images acquises.

10. Méthode selon l'une quelconque des revendications 7 à 9, et comprenant les étapes de traitement des images acquises de manière à déterminer des paramètres indiquant l'état des composants prédéterminés ; et de comparaison desdits paramètres à des valeurs de référence des composants prédéterminés.
